# FASCICULE DE BREVET EUROPEEN

(11) **EP 1 703 105 B1**
(45) Date de publication et mention de la délivrance du brevet: **21.04.2010**
(21) Numéro de dépôt: 05292488.3
(22) Date de dépôt: 23.11.2005
(51) Int. Cl.: F02D 41/02, F02D 41/40

(54) **Système d'aide à la régénération d'un piège à NOx intégré dans une ligne d'échappement d'un moteur de véhicule automobile**
Vorrichtung zur Regenerierung eines NOX-Speicherkatalysators im Abgasstrans eines Kraftfahrzeugmotors
System for assisting the regeneration of a storage/releasing NOX trap in an exhaust system of a motor vehicle

(30) Priorité: 17.02.2005 FR 0501649
(43) Date de publication de la demande: 20.09.2006
(73) Titulaire: PEUGEOT CITROËN AUTOMOBILES S.A., 78140 Vélizy Villacoublay (FR)
(72) Inventeur: Folliot, Pascal, 78280 Guyancourt (FR); Ameloot, Piet, 92200 Neuilly sur Seine (FR); Guerin, Stéphane, 92250 La Garenne Colombes (FR); Lesueur, Jean Nicolas, 92250 La Garenne-Colombes (FR)
(74) Mandataire: Ménès, Catherine

(56) Documents cités:
- EP-A- 1 174 598
- US-A1- 2003 168 039
- US-B1- 6 412 276
- PATENT ABSTRACTS OF JAPAN vol. 1996, no. 02, 29 février 1996 (1996-02-29) -& JP 07 259533 A (NIPPON SOKEN INC), 9 octobre 1995 (1995-10-09)

## Description

La présente invention concerne un système d'aide à la régénération d'un piège à NOx intégré dans une ligne d'échappement d'un moteur de véhicule automobile.

Plus particulièrement, l'invention se rapporte à un tel système d'aide à la régénération d'un piège à NOx intégré dans une ligne d'échappement d'un moteur par exemple Diesel de véhicule automobile, dans lequel ce moteur est associé à des moyens à rampe commune d'alimentation en carburant associés à des moyens de pilotage de leur fonctionnement, de manière à provoquer des injections de carburant dans les cylindres du moteur, pour basculer celui-ci entre des fonctionnements en mélanges riche et pauvre.

Le document EP-A-1 174 598 décrit un dispositif permettant de purifier les gaz d'échappement d'un moteur à combustion interne. Ce dispositif comprend un catalyseur pour absorber et réduire les NOx.

Un piège à NOx est un système de réduction des émissions polluantes, qui traite les NOx grâce à un fonctionnement séquentiel de stockage/déstockage des NOx, c'est-à-dire fonctionnant en mélange pauvre dans lequel la richesse du mélange air/carburant est inférieure à 1 et en mélange riche dans lequel la richesse de ce mélange air/carburant est supérieure à 1.

Quand le piège est saturé en NOx, il est régénéré par un basculement du moteur en mode riche avec production de réducteurs comme entre autres HC et CO.

Ce basculement en mode riche est caractérisé par des modifications de paramètres comme la richesse, par diminution du débit d'air admis dans le moteur et une augmentation du débit de carburant, augmentation de la recirculation des gaz d'échappement en entrée de celui-ci (EGR) et utilisation d'une ou de plusieurs post-injections de carburant dans les cylindres du moteur.

Les émissions d'HC sur un moteur Diesel qui fonctionne en mode riche sont très importantes et plus ou moins inévitables à cause du réglage moteur qui utilise notamment une post-injection pour fonctionner dans ce mode.

Le problème est que dans ces émissions d'hydrocarbures, une proportion importante est constituée de méthane qui est un gaz très stable. En effet, celui-ci n'est converti qu'à très haute température dans le piège à NOx, c'est-à-dire à une température par exemple supérieure à 600°C. La température des gaz d'échappement atteignant rarement cette valeur dans un piège à NOx lors d'une purge DeNOx, il s'ensuit un risque d'avoir un niveau d'HC trop important en sortie de la ligne d'échappement.

L'expérience montre que cette proportion importante de méthane est la conséquence à la fois du processus de combustion à richesse élevée dans la chambre et de la façon dont est injecté le carburant dans le cycle.

Le but de l'invention est donc de résoudre ces problèmes.

A cet effet, l'invention a pour objet un système d'aide à la régénération d'un piège à NOx intégré dans une ligne d'échappement d'un moteur de véhicule automobile, dans lequel le moteur est associé à des moyens à rampe commune d'alimentation en carburant, associés à des moyens de pilotage de leur fonctionnement, de manière à provoquer des injections de carburant dans les cylindres du moteur, pour basculer celui-ci entre des fonctionnements en mélanges riche et pauvre, **caractérisé en ce que** les moyens d'alimentation sont adaptés pour déclencher au moins une post-injection de carburant, comprise entre -150° et -360° vilebrequin, et ce que pour régénérer le piège (4), on procède à une ou plusieurs injections à une richesse supérieure à 1 et à une post-injection tardive après 150° vilebrequin du point mort haut de combustion à une richesse inférieure à 1, de sorte que la richesse sur l'ensemble des injections est égale à 0,92, la quantité de carburant post-injectée étant déterminée à partir d'une cartographie d'injection prédéterminée en fonction du régime et de la charge du moteur.

Suivant d'autres caractéristiques de l'invention:
- une quantité élémentaire de carburant est injectée dans chaque cylindre à chaque cycle du moteur; et
- n quantités élémentaires de carburant sont injectées dans chaque cylindre tous les n cycles moteur.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un système d'aide selon l'invention;
- la Fig.2 illustre les différentes injections mises en oeuvre dans un système selon l'invention ;
- la Fig.3 représente différentes variantes d'injection ; et
- la Fig.4 illustre les résultats obtenus.

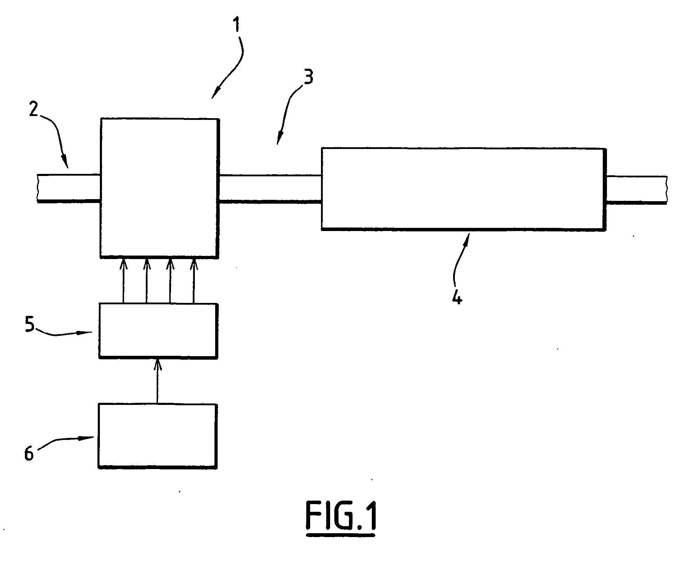

On reconnaît en effet sur la figure 1, un moteur de véhicule automobile tel qu'un moteur Diesel désigné par la référence générale 1, dont l'entrée est reliée à des moyens d'admission des gaz désignés par la référence générale 2 et dont la sortie est reliée à une ligne d'échappement désignée par la référence générale 3.

Cette ligne d'échappement est munie de façon classique de moyens de dépollution comprenant par exemple un piège à NOx désigné par la référence générale 4.

Ce moteur est également associé à des moyens à rampe commune d'alimentation en carburant désignés par la référence générale 5 sur cette figure, présentant n'importe quelle structure classique appropriée et qui sont associés à des moyens de pilotage de leur fonctionnement désignés par la référence générale 6, comprenant tout calculateur de contrôle moteur approprié pour provoquer des injections de carburant dans les cylindres du moteur.

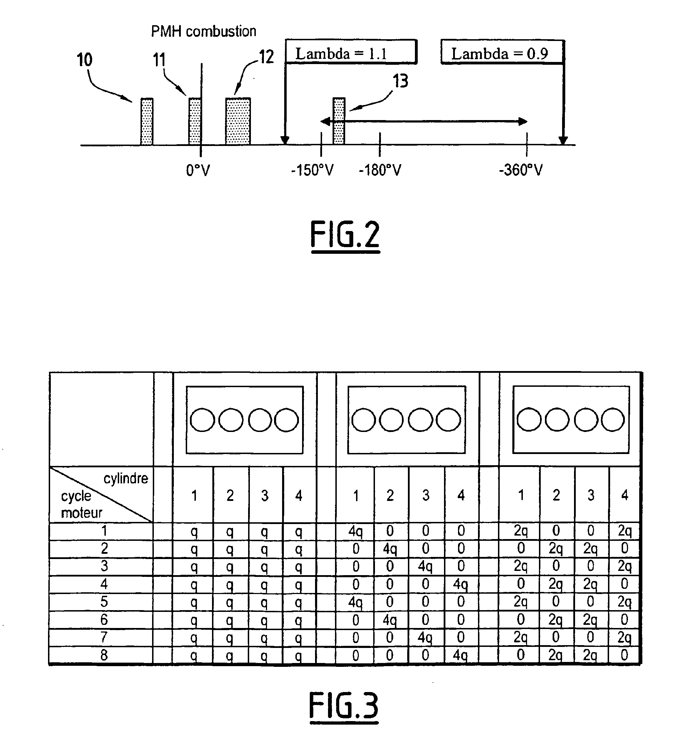

Comme cela est illustré sur la figure 2, de tels moyens permettent en effet de provoquer différentes injections de carburant dans les cylindres du moteur, selon par exemple au moins une injection pilote, désignée par la référence générale 10 sur cette figure 2, une injection principale désignée par la référence générale 11, associée éventuellement à une ou plusieurs post-injections de type classique, désignées par la référence générale 12.

Selon l'invention, les moyens d'alimentation sont également adaptés pour déclencher au moins une post-injection de carburant comprise entre -150° et -360° vilebrequin, c'est-à-dire après le point mort haut de combustion, telle que celle désignée par la référence générale 13 sur cette figure 2, pour basculer en mélange riche.

La borne à -360° vilebrequin correspond à la fermeture des soupapes d'échappement du cylindre concerné.

Ainsi, l'invention consiste à injecter une première quantité de carburant via une ou plusieurs injections, permettant d'obtenir une combustion et une richesse plus faible que l'objectif pour limiter la création de méthane (Lambda =1,1 par exemple, au lieu de 0,9), puis une deuxième quantité de carburant très tard dans le cycle de manière à ce que ce carburant injecté ne participe pas ou très peu à la combustion pour ne pas créer de méthane.

En fait, cette deuxième quantité de carburant injectée tard dans le cycle est déterminée en fonction du régime et de la charge du moteur et cette quantité peut être déterminée par exemple à partir d'une cartographie d'injection prédéterminée en fonction de ce régime et de cette charge, établie lors d'une campagne d'essais.

Comme cela est illustré sur la figure 3, différentes variantes d'injection peuvent être envisagées.

C'est ainsi par exemple, qu'une quantité élémentaire de carburant peut être injectée dans chaque cylindre à chaque cycle du moteur.

Cependant, n quantités élémentaires de carburant peuvent également être injectées dans chaque cylindre tout les n cycles moteur, comme cela est illustré par exemple par les quantités 4q et 2q, respectivement sur la figure 3.

Dans l'exemple illustré d'un moteur à quatre cylindres, un cycle moteur représente deux tours de vilebrequin ou 720°.

Ainsi, au lieu d'appliquer une post-injection de quantité q à chaque cylindre individuellement et à chaque cycle moteur (2 tours ou 720° vilebrequin pour un moteur à quatre temps), on peut imaginer que dans le cas d'un moteur à quatre cylindres, on injecte une quantité 4q dans un cylindre et on fait tourner les cylindres où on injecte de façon cyclique, cette post-injection tardive.

Chaque cylindre se voit alors injecter 4q de carburant tous les quatre cycles moteur, c'est-à-dire tous les huit tours vilebrequin pour un moteur à quatre temps.

Une quantité 2q dans chaque cylindre peut également être envisagée, mais on ne l'applique alors qu'à un cycle moteur sur deux. Par cycle moteur, deux des quatre cylindres, peuvent ainsi recevoir une telle post-injection.

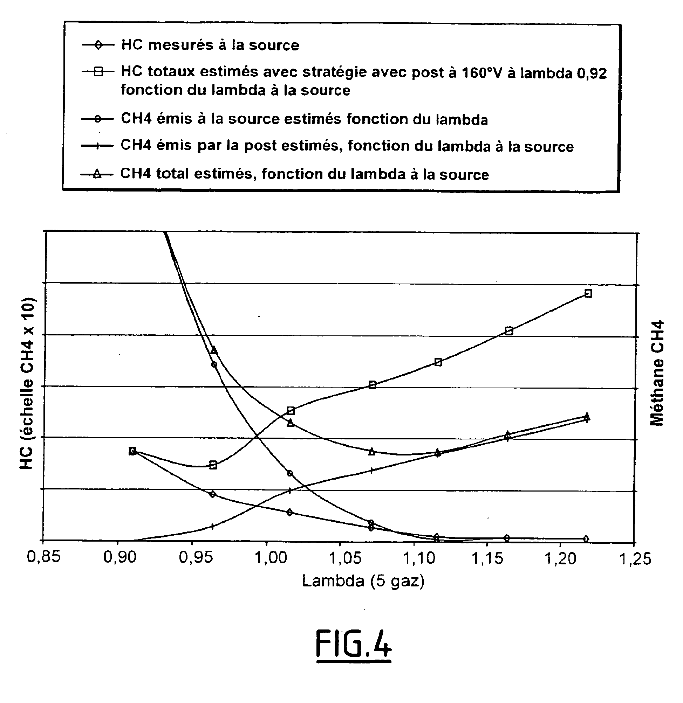

La figure 4 basée sur des essais et des simulations, montre l'intérêt d'une telle stratégie de réglage vis à vis du compromis méthane/HC totaux. On constate clairement à la vue de cette figure, le niveau élevé de méthane lorsque la richesse est importante.

Avec la stratégie mise en oeuvre dans un système selon l'invention, les niveaux d'HC totaux et de méthane sont représentés en sortie moteur en fonction de la richesse à la source, c'est-à-dire la richesse obtenue avec la première quantité injectée, richesse en sortie moteur égale à lambda =0,92 obtenue avec l'ensemble des injections. Dans ces configurations, on constate clairement une faible émission de méthane pour un réglage optimal consistant à injecter une première quantité de carburant qui permet d'obtenir un lambda aux alentours de 1,1 (lambda à la source), plus une deuxième quantité de carburant dans la post-injection tardive, qui permet d'obtenir un lambda de 0,92 en sortie du moteur, ceci avec certes une augmentation d'HC totaux, mais non problématique dans la mesure où ces HC peuvent être traités dans le piège à NOx.

## Revendications

1. Système d'aide à la régénération d'un piège à NOx (4) intégré dans une ligne d'échappement (3) d'un moteur (1) de véhicule automobile, dans lequel le moteur (1) est associé à des moyens (5) à rampe commune d'alimentation en carburant, associés à des moyens de pilotage (6) de leur fonctionnement, de manière à provoquer des injections (10, 11, 12) de carburant dans les cylindres du moteur, pour basculer celui-ci entre des fonctionnements en mélanges riche et pauvre, **caractérisé en ce que** pour les moyens d'alimentation (5, 6) sont adaptés pour déclencher au moins une post-injection (13) de carburant, comprise entre - 150° et -360° vilebrequin, et **en ce que** pour régénérer le piège (4), on procède à une ou plusieurs iniections à une richesse supérieure à 1 et à une post-injection tardive après 150° vilebrequin du point mort haut de combustion à une richesse inférieure à 1, de sorte que la richesse sur l'ensemble des injections est égale à 0,92, la quantité de carburant post-injectée étant déterminée à partir d'une cartographie d'injection prédéterminée en fonction du régime et de la charge du moteur.

2. Système selon la revendication 1, **caractérisé en ce qu'**une quantité élémentaire de carburant est injectée dans chaque cylindre à chaque cycle du moteur.

3. Système selon la revendication 1 ou 2, **caractérisé en ce que** n quantités élémentaires de carburant sont injectées dans chaque cylindre tous les n cycles moteur.

## Claims

1. System for assisting the regeneration of a NOx trap (4) integrated in an exhaust line (3) of an engine (2) of an automobile vehicle, in which the engine (1) is associated with fuel supply common manifold means (5), associated with control means (6) for their functioning, so as to cause injections (10, 11, 12) of fuel in the cylinders of the engine, to swing the latter between rich and poor mixture functioning modes, **characterized in that** the supply means (5, 6) are adapted to trigger at least one post-injection (13) of fuel, comprised between -150° and -360° crankshaft, and **in that** to regenerate the trap (4), one proceeds with one or more injections at a richness greater than 1 and a late post-injection after 150° crankshaft from the upper dead point of combustion at a richness less than 1, such that the richness over the whole of the injections is equal to 0.92, the post-injected quantity of fuel being determined from a predetermined injection cartography as a function of the working condition and the load of the engine.

2. System according to Claim 1, **characterized in that** an elementary quantity of fuel is injected in each cylinder on each cycle of the engine.

3. System according to Claim 1 or 2, **characterized in that** n elementary quantities of fuel are injected in each cylinder every n engine cycles.

## Patentansprüche

1. Hilfssystem zum Regenerieren einer NOx-Falle (4), die in eine Auspufflinie (3) eines Motors (1) eines Kraftfahrzeugs integriert ist, bei der der Motor (1) mit Mitteln (5) mit gemeinsamer Kraftstoffversorgungsrampe verbunden ist, die mit Mitteln (6) zum Steuern ihres Betriebs derart verbunden sind, dass Kraftstoffeinspritzungen (10, 11, 12) in die Zylinder des Motors veranlasst werden, um diesen zwischen den Betriebsarten mit reichhaltigem und armem Gemisch umzuschalten, **dadurch gekennzeichnet, dass** die Versorgungsmittel (5, 6) mindestens eine Kraftstoffnacheinspritzung (13) zwischen 150° und 360° Kurbelwelle auslösen können, und dass man zum Regenerieren der Falle (4) eine oder mehrere Einspritzungen mit einem Gehalt größer als 1 und eine verzögerte Nacheinspritzung nach 150° Kurbelwelle vom oberen Verbrennungstotpunkt mit einem Gehalt kleiner als 1 derart ausführt, dass der Gehalt aller Einspritzungen gleich 0,92 ist, wobei die nacheingespritzte Kraftstoffmenge ausgehend von einer vorbestimmten Einspritzkartographie in Abhängigkeit von der Drehzahl und der Belastung des Motors bestimmt wird.

2. System nach Anspruch 1, **dadurch gekennzeichnet, dass** bei jedem Zyklus des Motors eine elementare Kraftstoffmenge in jeden Zylinder des Motors eingespritzt wird.

3. System nach Anspruch 1 oder 2, **dadurch gekennzeichnet, dass** alle n Motorzyklen n elementare Kraftstoffmengen in jeden Zylinder eingespritzt werden.
